## Europäisches Patentamt
## European Patent Office
## Office européen des brevets

(19)

(11) Veröffentlichungsnummer: **0 307 714 B1**

(12) **EUROPÄISCHE PATENTSCHRIFT**

(45) Veröffentlichungstag der Patentschrift: **13.01.93**

(51) Int. Cl.5: **G01S 17/02**, G01S 17/46, G01S 7/48

(21) Anmeldenummer: **88114135.2**

(22) Anmeldetag: **30.08.88**

(54) **Lichttaster.**

(30) Priorität: **02.09.87 DE 3729334**

(43) Veröffentlichungstag der Anmeldung:
**22.03.89 Patentblatt 89/12**

(45) Bekanntmachung des Hinweises auf die
Patenterteilung:
**13.01.93 Patentblatt 93/02**

(84) Benannte Vertragsstaaten:
**BE CH DE FR GB LI NL SE**

(56) Entgegenhaltungen:
**DE-A- 2 800 451**
**DE-A- 3 147 525**
**FR-A- 2 235 356**
**GB-A- 2 021 893**

**PATENT ABSTRACTS OF JAPAN, Band 6, Nr.
104 (P-122)[982], 15. Juni 1982; & JP-A-57
37209 (FUJITSU FANUC K.K.) 01-03-1982**

**Druckschrift "National MO-
Dreistrahl-Schalter Fotoelektrische Schalter
der 2. Generation", SDS-Relais AG, Deisenhofen**

(73) Patentinhaber: **Erwin Sick GmbH Optik-
Elektronik**
**Sebastian-Kneipp-Strasse 1**
**W-7808 Waldkirch(DE)**

(72) Erfinder: **Fetzer, Günter**
**Sonnhalde 97a**
**W-7803 Gundelfingen(DE)**
Erfinder: **Meinert, Thomas**
**Wiesenstrasse 78**
**W-7830 Emmendingen(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht von einem Lichttaster aus, wie er in dem Prospekt "National MQ-Dreistrahl-Schalter Fotoelektrische Schalter der 2. Generation" der SDS-Relais AG, Deisenhofen beschrieben ist. Bei diesem Lichttaster sind die Detektionszonen durch voneinander separate lichtempfindliche Flächen realer Fotodetektoren gebildet, die unter beträchtlichem Abstand im Gehäuse des Lichttasters untergebracht sind. Damit geht ein platzaufwendiger Aufbau einher. Die Signalauswertung erfolgt durch rein elektronische Signaladdition, logarithmische Verstärkung der Summensignale und anschließende Differenzbildung. Das erhaltene Differenzsignal wird zur Abstandsmessung mit einem vorgegebenen Referenzpegel verglichen, durch dessen Veränderung sich die Tastweite einstellen läßt. Nachteilig dabei ist, daß elektronische Pegelschwankungen das Meßergebnis verfälschen können. Es bedarf daher einer vergleichsweise aufwendigen Nachweiselektronik, um die gewünschte Meßgenauigkeit zu gewährleisten.

Der US-PS 44 69 939 ist eine Einrichtung zur optischen Entfernungsmessung zu entnehmen, die zur Fokussierung einer Kamera dient. Zwei Lichtempfangssysteme bilden das Objekt nach dem Triangulationsprinzip auf zwei ortsempfindliche Fotodetektoren ab, und es erfolgt ein Abgleich der Lichtempfangssysteme durch Verschieben eines beiden Lichtempfangssystem zugehörigen Dachkantspiegels, um das Bild des Objekts auf den Fotodetektoren zu zentrieren und zu fokussieren. Aus dem Maß der Verschiebung des Dachkantspiegels ergibt sich die Entfernung des Objekts.

Aufgabe der Erfindung ist es, einen Lichttaster der genannten Art anzugeben, der es bei optisch und elektronische unaufwendigem, kompakten Aufbau erlaubt, die Tastweite innerhalb eines großen Stellbereichs präzise vorzugeben und zu verändern, wobei eine gute Objektdiskriminierung insbesondere von Objekten mit inhomogenen Reflexionseigenschaften und/oder nur teilweise in den Sendelichtstrahl fallenden Objekten sowie eine gute Hintergrundausblendung und Abstandsselektivität gewährleistet sein soll und wobei die Anzahl verstellbarer Bauteile auf ein Minimum herabgesetzt ist.

Zur Lösung dieser Aufgabe sind die Merkmale des Patentanspruchs 1 vorgesehen.

An der erfindungsgemäß vorgesehenen gemeinsamen Detektionszone erfolgt eine additive Überlagerung des von den beiden Lichtempfangssystemen aufgenommenen Strahlungsflusses auf optischem Weg. Man spart so einen Fotodetektor und eine elektronische Signaladdition und erreicht einen entsprechend einfachen Aufbau. Ein weiterer Vorteil ist, daß alle Fotodetektoren räumlich dicht benachbart liegen. Sie können dadurch insbesondere auf einem einzigen Trägersubstrat realisiert sein, was herstellungstechnische Vorteile bringt. Der Anschluß der Fotodetektoren an die elektronische Auswerteschaltung gestaltet sich ebenfalls besonders einfach. Nicht zuletzt ist bei geeigneter Strahlführung ein kompakter Aufbau des erfindungsgemäßen Lichttasters möglich.

Die Umlenkoptik des erfindungsgemäßen Lichttasters enthält einen vor der Fotodetektoranordnung liegenden Dachkantspiegel, dessen Halbseiten zu je einem der Lichtempfangssysteme gehören. Der Dachkantspiegel kann einen Scheitelwinkel von 90° haben. Er läßt sich parallel zu der Sendesystemachse in Richtung auf die Fotodetektoren hin bzw. davon weg verstellen. Damit wird die Möglichkeit einer einfachen Änderung des Winkels zwischen den Systemachsen zur Einstellung der gewünschten Tastweite eröffnet. Die optoelektronischen Bauelemente des Lichtsenders und der Lichtempfangssysteme bleiben dabei fest, was im Hinblick auf Montage, Justierung und Entstörung des Lichttasters wesentliche Vorteile bietet.

Zu jedem der Lichtempfangssysteme gehört ein gehäusefestes Objektiv und ein gehäusefester vorzugsweise ebener Umlenkspiegel, der Licht zu dem verstellbaren Dachkantspiegel hin reflektiert. Die Empfangssystemachsen sind durch einen Mittelstrahl bestimmt, der durch den Scheitel des Objektivs und den Mittelpunkt einer der Trennlinlen zwischen den drei Fotodetektoren hindurchgeht. Bei Verstellung des Dachkantspiegels wird der Auftreffpunkt dieses Mittelstrahls auf den feststehenden Umlenkspiegeln verschoben, wodurch sich bei festem Objektiv der Winkel zwischen den Systemachsen ändert.

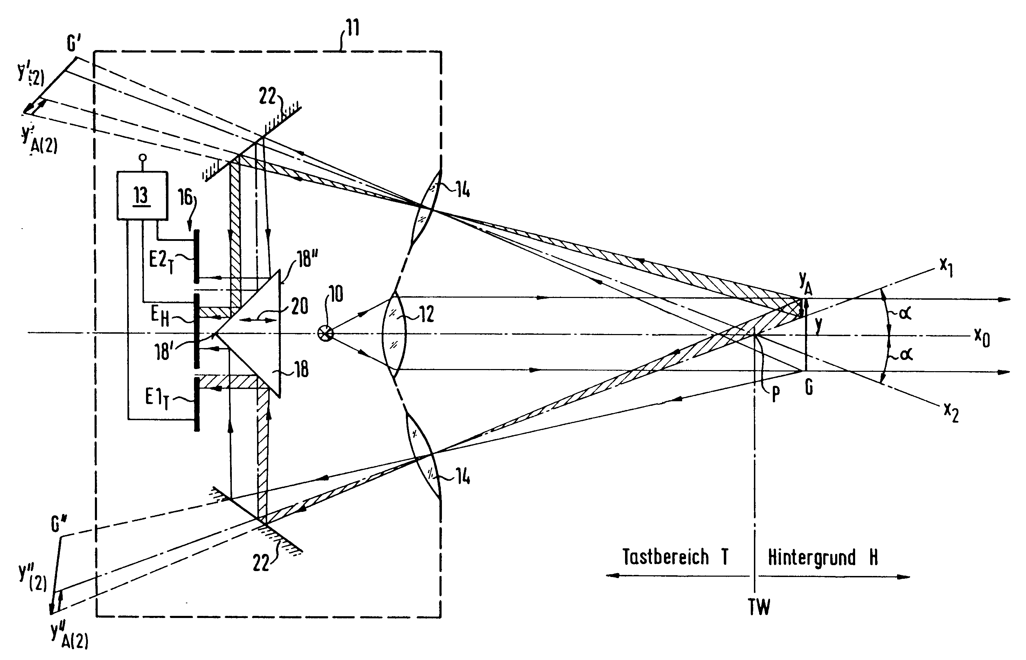

Die Erfindung wird im folgenden anhand der Zeichnung näher erläutert. Die einzige Abbildung zeigt schematisch den Strahlengang bei einem erfindungsgemäßen Lichttaster.

Der Lichttaster hat eine Lichtquelle 10 und eine Sendeoptik 12, die ein paralleles Lichtbündel aus einer Lichtaustrittsöffnung in der Frontseite eines gestrichelt angedeuteten Lichttastergehäuses 11 austreten läßt. Die Systemachse des Lichtsenders 10, 12 ist mit $x_0$ bezeichnet. Sie schneidet sich in einem gemeinsamen Punkt P mit den Systemachse $x_1$ und $x_2$ zweier Empfangssysteme, zu denen je ein auf der einen bzw. anderen Seite der Sendeoptik 12 in der Frontseite des Lichttastergehäuses 11 angeordnetes Empfangsobjektiv 14 und ein dahinter im Inneren des Lichttastergehäuses 11 angebrachter ebener Umlenkspiegel 22 gehören. Beiden Empfangssystemen ist überdies ein Dachkantspiegel 18 und ein lichtempfindliches Element 16 zugeordnet. Die Empfangssystemachsen $x_1$, $x_2$ liegen mit der Sendesystemachse $x_0$, die die Hauptachse des Lichttasters darstellt, in einer Systemebene, die mit der Zeichnungsebene identisch ist, und sie schließen mit der Sendesystemachse entgegengesetzt gleiche Winkel $\alpha$ ein. Der Schnittpunkt der Systemachsen $x_0$, $x_1$ und $x_2$ markiert die Tastweite TW des Lichttasters, d.h. die Grenze zwischen einem Tastbereich T und einem Hintergrundsbereich H. Innerhalb des Tastbereichs in den Sendelichtstrahl gelangende Objekte sollen zu einem Ansprechen des Lichttasters führen, während im Hintergrundsbereich H befindliche Objekte nicht erfaßt werden sollen.

Das lichtempfindliche Element 16 liegt in mittiger, symmetrischer Anordnung bezüglich der Sendesystemachse $x_0$ hinter dem Lichtsender 10, 12. Es ist eben und im wesentlichen in einer senkrecht zur Sendesystemachse $x_0$ verlaufenden Ebene angeordnet und gegen einen direkten Lichteinfall vom Lichtsender 10, 12 her abgeschirmt. Das lichtempfindliche Element 16 weist drei elektrisch getrennte, in einer Reihe liegende Detektionszonen auf. Eine zentrale Detektionszone $E_H$ wird von der Sendesystemachse $x_0$ durchstoßen und erstreckt sich von der Sendesystemachse $x_0$ innerhalb der Systemebene in entgegengesetzten Richtungen um gleiche Beträge. Daran anschließend sind zwei Detektionszonen $E1_T$, $E2_T$ vorgesehen. Zwischen dem lichtempfindlichen Element 16 und der Lichtquelle 10 ist auf der Sendesystemachse $x_0$ der den Querschnitt eines gleichschenkligen, rechtwinkligen Dreiecks aufweisende Dachkantspiegel 18 derart angeordnet, daß die Dachkante 18' auf der Sendesystemachse $x_0$ gegenüber dem lichtempfindlichen Element 16 liegt und die Grundfläche 18'' senkrecht zur Sendesystemachse $x_0$ verläuft und vom lichtempfindlichen Element 16 abgewandt ist. Der Dachkantspiegel 18 läßt sich zur Einstellung der Tastweite TW in Pfeilrichtung 20 parallel zu der Sendesystemachse $x_0$ relativ zum gehäusefesten, lichtempfindlichen Element 16 verstellen.

Die Umlenkspiegel sind zu beiden Seiten des Dachkantspiegels 18 in der Systemebene und auf den Empfangssystemachsen $x_1$ bzw. $x_2$ gehäusefest angeordnet. Sie werfen das Empfangslicht im wesentlichen in einer senkrecht auf der Sendesystemachse $x_0$ stehenden Richtung zu dieser hin. Sämtliche Bauelemente weisen auch eine Erstreckung senkrecht zur zeichnungsebene auf.

Die Empfangssystemachsen $x_1$, $x_2$ sind jeweils durch einen gedachten Mittelstrahl bestimmt, der durch den Scheitel des entsprechenden Objektivs 14 und nach Umlenkung am Umlenkspiegel 22 und dem Dachkantspiegel 18 auf die Trennlinie zwischen den zugeordneten Detektionszonen $E_H$, $E1_T$ bzw. $E_H$, $E2_T$ fällt. Bei Verstellen des Dachkantspiegels 18 in Richtung des Doppelpfeiles 20 wird der Auftreffpunkt dieses Mittelstrahls auf dem Umlenkspiegel 22 verschoben, wodurch sich, da das Objektiv 14 gehäusefest ist, der Winkel $\alpha$ zwischen den Systemachsen $x_0$, $x_1$ bzw. $x_0$, $x_2$ und damit die Tastweite TW ändert. Jeder Umlenkspiegel 22 muß erfindungsgemäß eine dem Stellbereich des Dachkantspiegels 18 entsprechende Längenerstreckung aufweisen.

Die Anordnung und Unterteilung der Detektionszonen $E1_T$, $E_H$, $E2_T$ des lichtempfindlichen Elements 16 ist so vorgenommen, daß die äußeren Detektionszonen $E1_T$, $E2_T$ über je eines der Empfangssysteme Licht im wesentlichen aus dem Tastbereich T, und die zentrale Detektionszone $E_H$ über beide Empfangssysteme zugleich Licht im wesentlichen aus dem Hintergrundsbereich H des Lichttastersichtfelds aufnimmt. Man erkennt dies zunächst an der Tatsache, daß ein mit den Empfangssystemachse $x_1$, $x_2$ zusammenfallender Lichtstrahl genau auf die Trennlinien zwischen der zentralen Detektionszone $E_H$ und den äußeren Detektionszonen $E1_T$, $E2_2$ fällt. Weiter zeigt die Zeichnung exemplarisch einen auf der Sendesystemachse $x_0$ liegenden, im Hintergrundsbereich H des Lichttastersichtfelds befindlichen Gegenstand G, der durch einen Pfeil y symbolisiert ist. Der Pfeil $y_A$ repräsentiert eine Oberflächenzone des Gegenstands G, die stärker reflektierend ist als seine übrige Oberfläche. Durch die beiden Empfangssysteme und den Dachkantspiegel werden auf dem lichtempfindlichen Element 16 zwei überlagerte Bilder des Gegenstands G entworfen, was durch schraffierte Strahlengänge angeordnet ist. Die Mittelpunkte dieser Bilder liegen symmetrisch in gleichem Abstand bezüglich der Sendesystemachse $x_0$. Beide Bilder liegen schwerpunktsmäßig auf der dem Hintergrundsbereich H zugeordneten, gemeinsamen Detektionszone $E_H$. Bei einem innerhalb des Tastbereichs T liegenden Gegenstand würden dagegen schwerpunktsmäßig die dem Tastbereich T zugeordneten Detektionszonen $E1_T$, $E2_T$ beaufschlagt (nicht dargestellt).

Im Anschluß an den oberen Umlenkspiegel 22 ist das vom Objektiv 14 auf dem lichtempfindlichen Element 16 entworfene Bild G' des Gegenstandes G visuell wiedergegeben. Ganz entsprechend ist auch die Abbildung durch das untere Empfangssystem dargestellt, wobei das virtuelle Bild mit G'' bezeichnet ist.

Aus der Lage der Bilder G' und G'' und insbesondere $Y'_{(2)}, y'_{A(2)}$ sowie $y''_{(2)}, y''_{A(2)}$ erkennt man, daß die Bildlage auf der einen Seite der Sendesystemachse $x_0$, an der sich die Detektionszone $E1_T$ befindet, genau umgekehrt wie auf der anderen Seite der Sendesystemachse $x_0$ ist, an der sich die Detektionszone $E2_T$ befindet. Von der stärker reflektierenden Zone $y_A$ des Gegenstands G wird daher zwar im ersten Lichtempfangssystem ein erhöhter Strahlungsfluß auf die dem Tastbereich T zugeordnete Detektionszone $E1_T$ geworfen. Im zweiten Lichtempfangssystem wird aber umgekehrt die dem Hintergrundsbereich H zugeordnete, gemeinsame Detektionszone $E_H$ mit dem erhöhten Empfangsstrahlungsfluß beaufschlagt.

Zur Gewinnung eines zur Gegenstanderkennung herangezogenen Ausgangssignals sind die Detektionszonen $E_H$, $E1_T$ und $E2_T$ jeweils an einer Auswerteelektronik 13 angeschlossen, welche ein Summensignal aus den Ausgangssignalen der dem Tastbereich zugeordneten Detektionszonen $E1_T$, $E2_T$ sowie die Differenz zwischen diesem Summensignal und dem Ausgangssignal der gemeinsamen den Hintergrundsbereich H zugeordneten Detektionszone $E_H$ bildet, an der eine additive Überlagerung des aus dem Hintergrundsbereich H kommenden Empfangsstrahlungsflusses auf optischen Weg erfolgt. Die in der Auswerteelektronik 13 durchgeführten arithmetischen Operationen können durch folgende Formel wiedergegeben werden:

$$S_A = (S_{1T} + S_{2T}) - (S_H)$$

$S_{1T}$:    elektrisches Ausgangssignal der Detektionszone $E1_T$

$S_{2T}$:    elektrisches Ausgangssignal der Detektionszone $E_{2T}$

$S_H$ :    elektrisches Ausgangssignal der Detektionszone $E_H$

Eine elektronische Summierung von dem Hintergrundsbereich H zugeordneten Ausgangssignalen ist nicht erforderlich, da dies schon auf optischem Weg geschehen ist. Durch entsprechende Gestaltung der Lichtempfangsoptik ist es auch möglich, das dem Tastbereich T zugeordnete Summensignal oder beide Summensignale auf optischem Weg zu gewinnen (nicht dargestellt).

Mit dem erhaltenen Ausgangssignal werden Inhomogenitäten des Empfangsstrahlungsflusses kompensiert, die durch inhomogene Reflexionseigenschaften des detektierten Objekts bedingt sind. Bei dem dargestellten Beispiel gelangt zwar im ersten Empfangssystem ein erhöhter Strahlungsfluß von dem stärker reflektierenden Abschnitt $y_A$ des Gegenstands auf die dem Tastbereich zugeordneten Detektionszone $E1_T$, was für sich allein einen innerhalb des Tasbereichs T befindlichen Gegenstand vortäuschen könnte. Durch die umgekehrte Bildlage im zweiten Empfangssystem wird aber ein entsprechend erhöhter Strahlungsfluß auf die dem Hintergrundsbereich zugeordnete, gemeinsame Detektionszone $E_H$ geworfen, so daß sich der Fehler bei der Differenzbildung zur Gewinnung des Ausgangssignals gerade aufhebt. Durch Inhomogenitäten der Beleuchtung und einen nur teilweisen Eintritt eines Objekts in den Sendelichtstrahl bedingte Fehler werden in entsprechender Weise kompensiert. Der erfindungsgemäße Lichttaster zeichnet sich also durch eine sehr gute Objektdiskriminierung und Hintergrundsausblendung aus. Sein Ausgangssignal hat einen scharf definierten Nulldurchgang genau bei der eingestellten Tastweise TW, und zwar unabhängig von optischen Inhomogenitäten des Tastgutes und der Beleuchtung.

Das beschriebene Kompensationsprinzip erfordert zwei zur optischen Hauptachse $x_0$ symmetrische Empfgangssystemachsen $x_1$, $x_2$, wobei letztere durch die Trennlinien zwischen den dem Tastbereich T bzw. Hintergrundsbereich H zugeordneten Detektionszonen $E1_T$, $E_H$, $E2_T$ des lichtempfindlichen Elements 16 und den Scheitelpunkt eines Objektivs 14 der Lichtempfangssysteme definiert sind. Im Interesse eines räumlich kompakten Aufbaus sollten die Empfangssystemachsen $x_1$, $x_2$ möglichst dicht beieinander liegen.

Zur Einstellung der Tastweite TW wird die Lage des Dachkantspiegels 18 längs der Hauptsystemachse $x_0$ verstellt, was eine Lageänderung der virtuellen Bilder der Detektionszonen $E1_T$, $E_H$, $E2_T$ zur Folge hat. Die Lage der entworfenen Zwischenbilder ändert sich um eben den Betrag, um den der Dachkantspiegel 18 verstellt wird. Die Verstellung der Tastweite TW anhand des Dachkantspiegels 18 hat den Vorteil, daß nur ein passives optisches Element bewegt wird, während die optoelektronischen Bauteile des Lichtsenders 10, 12 und der Lichtempfangssysteme ortsfest bleiben. Ein weiterer Vorteil ist die räumlich dicht benachbarte Anordnung aller lichtempfindlichen Elemente und das Vorhandensein von nur drei Detektionszonen.

**Patentansprüche**

1.  Lichttaster mit einem eine Lichtquelle (10) und eine Sendeoptik (12) aufweisenden Lichtsender, der Licht entlang einer Sendesystemachse ($x_0$) abstrahlt, und mit zwei auf entgegengesetzten Seiten des Lichtsenders neben diesem angeordneten Lichtempfangssystemen mit je einem fest angeordneten Umlenkspiegel (22) und einem Objektiv (14), die von einem zu detektierenden Objekt rückgestreutes Licht entlang von Licht-Empfangssystemachsen ($x_1$, $x_2$) aufnehmen, die sich in einem gemeinsamen Schnittpunkt (P) mit der Sendesystemachse ($x_0$) schneiden und symmetrisch zu der Sendesystemachse ($x_0$) mit dieser in einer Ebene liegen, mit einem zwischen den beiden Umlenkspiegeln (22) befindlichen, beiden Lichtempfangssystemen zugeordneten Dachkantspiegel (18), mit einem beiden Lichtempfangssytemen zugeordneten lichtempfindlichen Element mit drei elektrisch getrennten, in einer Reihe liegenden photoelektrischen Detektionszonen ($E1_T$, $E_H$, $E2_T$), von denen die äußeren ($E1_T$, $E2_T$) einem vor dem Schnittpunkt (P) liegenden Tastbereich (T) zugeordnet sind und Licht über je eines der (beiden) Lichtempfangssysteme im wesentlichen aus dem Tastbereich (T) aufnehmen und von denen die mittlere ($E_H$) einem hinter dem Schnittpunkt (P) liegenden Hintergrundsbereich (H) zugeordnet ist und Licht über beide Lichtempfangssysteme im wesentlichen aus dem Hintergrundsbereich (H) aufnimmt, wobei zur Gewinnung eines zur Gegenstanderkennung herangezogenen Ausgangssignals die Detektionszonen ($E_H$, $E1_T$ und $E2_T$) jeweils an einer Auswerteelektronik (13) angeschlossen sind, welche ein Summensignal aus den Ausgangssignalen der dem Tastbereich (T) zugeordneten Detektionszonen ($E1_T$, $E2_T$) sowie die Differenz zwischen diesem Summensignal und dem Ausgangssignal der gemeinsamen den Hintergrundsbereich (H) zugeordneten Detektionszone ($E_H$) bildet, an der eine additive Überlagerung des aus dem Hintergrundsbereich (H) kommenden Empfangsstrahlungsflusses auf optischen Weg erfolgt und wobei die Lichtempfangssystemachsen ($x_1$, $x_2$) jeweils durch einen gedachten Mittelstrahl bestimmt sind, der durch den Scheitel des entsprechenden Objektivs (14) und nach Umlenkung am Umlenkspiegel (22) und dem Dachkantspiegel (18) auf die Trennlinie zwischen den zugeordneten Detektionszonen ($E_H$, $E1_T$ bzw. $E_H$, $E2_T$) fällt, so daß bei Verstellen des Dachkantspiegels (18) in Richtung des Doppelpfeiles (20) der Auftreffpunkt dieses Mittelstrahls auf dem Umlenkspiegel (22) verschoben wird, wodurch sich, der Winkel $\alpha$ zwischen den Lichtempfangssystemachsen ($x_1$, $x_2$) und damit die Tastweite (TW) ändert.

2. Lichttaster nach Anspruch 1,
dadurch **gekennzeichnet,**
daß die Dachkante (18') des Dachkantspiegels (18) auf der Sendesystemachse ($x_0$) liegt und der mittleren Detektionszone ($E_H$) zugewandt ist.

3. Lichttaster nach Anspruch 1 oder 2,
dadurch **gekennzeichnet,**
daß der Dachkantwinkel durch die Sendesystemachse ($x_0$) halbiert wird.

4. Lichttaster nach einem der Ansprüche 1 bis 3,
dadurch **gekennzeichnet,**
daß der Dachkantspiegel (18) einen Scheitelwinkel von 90° hat.

5. Lichttaster nach einem der Ansprüche 1 bis 4,
dadurch **gekennzeichnet,**
daß eine Auswerteelektronik (13) ein Ausgangssignal durch Differenzbildung einer Summe von Signalen der äußeren Detektionszonen ($E1_T$, $E2_T$) und eines Signals der mittleren Detektionszone ($E_H$) bildet.

6. Lichttaster nach einem der Ansprüche 1 bis 5,
dadurch **gekennzeichnet,**
daß der Winkel $\alpha$ zwischen der Sendesystemachse ($x_0$) und der einen und der anderen Empfangssystemachse ($x_1$, $x_2$) bei der Mittelstellung des Dachkantspiegels (18) zwischen etwa 2° und 45°, vorzugsweise 2° und 10° beträgt.

7. Lichttaster nach einem der Ansprüche 1 bis 6,
dadurch **gekennzeichnet,**
daß der Winkel $\alpha$ zwischen 1° und 15°, vorzugsweise 1° und 5° durch Verschiebung des Dachkantspiegels (18) veränderbar ist.

## Claims

1. Light sensor comprising a light transmitter having a light source (10) and an optical transmitting system (12) which radiates light along an axis ($X_0$) of the transmitting system; and two light receiving systems arranged on opposite sides of the light transmitter alongside the latter, wherein each light receiving system has a deflecting mirror (22) and an objective (14) which pick up light scattered back from an object to be detected along axes ($X_1$, $X_2$) of the receiving system which intersect at a common intersection point (P) with the axis ($X_0$) of the transmitter system and lie symmetric to the axis ($X_0$) of the transmitter system in one plane with the latter, the sensor comprising a roof edge mirror (18) located between the two deflecting mirrors (22) and associated to the two light receiving systems, a light-sensitive element associated to one of the two light receiving systems, this element having three electrically separated detection zones ($E1_T$, $E_H$, $E2_T$) lying in a row, of which the outer zones ($E1_T$, $E2_T$) are associated to a detection region (T) located before the intersection point (P) and pick up light from the detection region (T) by means of a respective one of the two light receiving systems, and of which the central detection zone ($E_H$) is associated to a background region (H) located behind the intersection point (P) and picks up light substantially from the background region (H) by means of the two light receiving systems, wherein, in order to obtain an output signal used to recognize an article, the detection zones ($E_H$, $E1_T$, $E2_T$) are connected to a respective electronic evaluation circuit (13) which forms a sum signal from the output signals of the detection zones (E1$_T$, E2$_T$) associated to the detection zone (T) and the difference between this sum signal and the output signal of the common detection zone (E$_H$) associated with the background region (H) at which an additive superposition of the reception radiation flow coming from the background region (H) occurs in an optical manner and the axes (X$_1$, X$_2$) of the light receiving systems are respectively determined by an imaginary central beam which falls on the separation line between the associated detection zones (E$_H$, E1$_T$, or E$_H$, E2$_T$) via the apex of the corresponding objective (14) and after deflection at the deflection mirror (22) and the roof edge mirror (18), such that on displacing the roof edge mirror (18) in the direction of the double arrow (20) the impingement point of this center beam on the deflection mirror (22) is displaced, whereby the angle ($\alpha$) between the axes of the light receiving systems (X$_1$, X$_2$) and thus the detection range (TW) is modified.

2. Light sensor in accordance with claim 1, characterized in that the roof edge (18') of the roof edge mirror (18) lies on the axis (X$_0$) of the transmitting system and is disposed towards the central detection zone (E$_H$).

3. Light sensor in accordance with claim 1 or claim 2, characterized in that the roof edge angle is bisected by the axis (X$_0$) of the transmitting system.

4. Light sensor in accordance with one of the claims 1 to 3, characterized in that the roof edge mirror (18) has an apex angle of 90°.

5. Light sensor in accordance with one of the claims 1 to 4, characterized in that an electronic evaluation circuit (13) forms an output signal by formation of the difference of the sum of signals from the outer detection zones (E1$_T$ + E2$_T$) less a signal of the central detection zone (E$_H$).

6. Light sensor in accordance with one of the claims 1 to 5, characterized in that the angle $\alpha$ between the axis (X$_0$) of the transmitting system and the one and the other axes of the receiving systems (x$_1$, x$_2$) amounts to between approximately 2 and 45° and preferably to between 2 and 10° for the central position of the roof edge mirror (18).

7. Light sensor in accordance with one of the claims 1 to 6, characterized in that the angle $\alpha$ can be varied between 1 and 15°, preferably between 1 and 5° by displacement of the roof edge mirror (18).

## Revendications

1. Détecteur de lumière, comprenant un émetteur de lumière ayant une source de lumière (10) et un système d'émission optique (12) qui émet de la lumière le long d'un axe (X$_0$) du système d'émission; et deux systèmes de réception de lumière agencés sur des côtés opposés de l'émetteur de lumière le long de ce dernier, dans lequel chaque système de réception de lumière comporte un miroir de renvoi (22) et un objectif (14) qui capte la lumière diffusée en retour par un objet à détecter le long d'axes (X$_1$, X$_2$) du système de réception qui se coupent en un point d'intersection commun (P) avec l'axe (X$_0$) du système d'émission et sont situés symétriquement par rapport à l'axe (X$_0$) du système d'émission dans un plan avec ce dernier, le détecteur comprenant un miroir à prisme (18) situé entre les deux miroirs de renvoi (22) et associé aux deux systèmes de réception de lumière, un élément sensible à la lumière et associé à l'un des deux systèmes de réception de lumière, cet élément ayant trois zones de détection séparées électriquement et disposées suivant une rangée (E1$_T$, E$_H$, E2$_T$), dont les zones extérieures (E1$_T$, E2$_T$) sont associées à une région de détection (T) située avant le point d'intersection (P) et captent la lumière provenant de la région de détection (T) au moyen d'un système respectif des deux systèmes de réception de lumière, et dont la zone de détection centrale (E$_H$) est associée à une région d'arrière-plan (H) située derrière le point d'intersection (P) et capte la lumière venant sensiblement de la région d'arrière-plan (H) au moyen des deux systèmes de réception de lumière, où, afin d'obtenir un signal de sortie utilisé pour reconnaître un article, les zones de détection (E$_H$, E1$_T$, E2$_T$) sont raccordées à un circuit électronique d'évaluation respectif (13) qui forme un signal de somme à partir des signaux de sortie des zones de détection (E1$_T$, E2$_T$) associé à la zone de détection (T) et la différence entre ce signal de somme et le signal de sortie de la zone de détection commune (E$_H$) associé à la région d'arrière-plan (H) où se produit de manière optique une superposition additive du flux de rayonnement de réception venant de la zone d'arrière-plan (H) et les axes (X$_1$, X$_2$) des systèmes de réception de lumière sont respectivement déterminés par un rayon central imaginaire qui tombe sur la ligne de séparation entre les zones de détection associées (E$_H$,

E1$_T$, ou E$_H$, E2$_T$) via le sommet de l'objectif correspondant (14) et après renvoi sur le miroir de renvoi (22) et le miroir à prisme (18), de telle sorte qu'en déplaçant le miroir à prisme dans le sens de la double flèche (20), le point où tombe ce rayon central sur le miroir de renvoi (22) est déplacé, dont il résulte que l'angle ($\alpha$) entre les axes des systèmes de réception de lumière (X$_1$, X$_2$) est modifié et ainsi la plage de détection (TW) est modifiée.

2. Détecteur de lumière selon la revendication 1, caractérisé en ce que l'arête (18') du miroir à prisme (18) est située sur l'axe (X$_0$) du système d'émission et est disposée en direction de la zone centrale de détection (E$_H$).

3. Détecteur de lumière selon l'une ou l'autre des revendications 1 et 2, caractérisé en ce que l'axe (X$_0$) du système d'émission forme une bissectrice de l'angle au sommet du prisme.

4. Détecteur de lumière selon l'une quelconque des revendications 1 à 3, caractérisé en ce que l'angle au sommet du miroir à prisme (18) est de 90°.

5. Détecteur de lumière selon l'une quelconque des revendications 1 à 4, caractérisé en ce qu'un circuit électronique d'évaluation (13) forme un signal de sortie en formant la différence de la somme de signaux venant des zones de détection extérieures (E1$_T$ + E2$_T$) moins un signal de la zone centrale de détection (E$_H$).

6. Détecteur de lumière selon l'une quelconque des revendications 1 à 5, caractérisé en ce que l'angle $\alpha$ entre l'axe (X$_0$) du système d'émission et l'un et l'autre axes des systèmes de réception (x$_1$, x$_2$) est compris entre approximativement 2 et 45° et de préférence entre 2 et 10° pour la position centrale du miroir à prisme (18).

7. Détecteur de lumière selon l'une quelconque des revendications 1 à 6, caractérisé en ce que l'on peut faire varier l'angle $\alpha$ entre 1 et 15°, de préférence entre 1 et 5° par déplacement du miroir à prisme (18).